# EUROPEAN PATENT SPECIFICATION

(11) **EP 1 280 639 B1**
(45) Date of publication and mention of the grant of the patent: **11.10.2006**
(21) Application number: 01919511.4
(22) Date of filing: 16.03.2001
(51) Int. Cl.: B27M 1/02, B27K 5/06, E04F 15/00

(54) **WOOD PRODUCT OF MASSIVE WOOD, FLOOR COVER AND METHOD AND EQUIPMENT FOR THE PRODUCTION OF WOODEN ELEMENTS**
MASSIVHOLZERZEUGNISS, BODENBELAD UND VERFAHREN UND VORRICHTUNG ZUR HERSTELLUNG VON HOLZELEMENTEN
PRODUIT DU BOIS EN BOIS MASSIF, REVETEMENT DE SOL, PROCEDE ET EQUIPEMENT POUR LA PRODUCTION D'ELEMENTS EN BOIS

(30) Priority: 16.03.2000 FI 20000611
(43) Date of publication of application: 05.02.2003
(60) Divisional application: 06101203.5
(73) Proprietor: Ilvolankoski OY, 83900 Juuka (FI)
(72) Inventor: KUKKONEN, Matti, FIN-83900 Juuka (FI)
(74) Representative: Lahti, Heikki
(86) International application number: PCT/FI2001/000263
(87) International publication number: WO 2001/068332

(56) References cited:
- WO-A1-94/29089
- WO-A1-95/30519
- US-A- 5 343 913
- US-A- 5 747 177

## Description

Massive wood floor products as known for example from WO-A-9530519 and their match-boarding equipment are manufactured after drying of saw material or saw blanks with the help of turning.

Hereunder the wood product of massive wood will mean first and foremost floor element, which is usually floor plank, floor board or lath parquet made of raw or dried saw material or massive wood blank.

According to the first aspect of the invention the object is to create a new type of wood element with improved durability. According to the second aspect of the invention the object is to improve the straightness of flat and edge surface of the wood product, preferably of the floor element compared to existing solutions and qualities of stiffness and flexural strength. According to the third aspect of the invention the object is to create wood product, preferably a floor element, in which surface layer as surface tightened and hardened in relation to the wooden interior of the wood element has been produced with hot pressing, which extends as continuous over at least the wood element until visible flat surface and longitudinal side contacting the flat surface so that continuity of the tightened and hardened surface on the side surfaces can be cut by matched tongue or groove or any other groove made to the longitudinal side. According to the fourth aspect of the invention the object is to reduce drying necessity of saw blanks and facilitate essentially the manufacturing of completed massive wood product directly from sawing-ready material or saw blank- According to the fifth aspect of the invention the object is to create a floor cover material, into which floor-heating could be integrated.

This invention concerns a method of manufacturing a wood product having the combined features of claim 1.

Tongue and groove joint of massive wood floor element can be formed either as traditional solution with one match or according to the invention with two matches or separate floor-heating or joint elements. In case of massive wood floor element deepened groove described in the invention or deepened groove in bottom flat surface of floor element can be used, with which a channel can be formed in floor cover consisting of floor elements, which will enable to install floor-heating in the floor and guarantee large heat transmission surface between floor element and heating element. Hence in accordance with the invention the application includes tongue and groove joint means and a tongue and groove joint by means of the same; forming tongue and groove joint to the floor element by means of a floor-heating or another joint element of the tongue and groove joint; deepened groove/-s for an installation of floor-heating; a floor cover, such as board floor, parquet or other floor cover that is consisting of wood products, according to the invention, provided with an integrated floor-heating.

It should be noted that the application also concerns invention to provide originally completed floor elements with deepened grooves according to the invention for installation of a floor-heating element and hence to integrate a floor cover and floor-heating element.

Hot pressing is carried out with fresh (possible also dry) saw material or saw blank, which can be pre-profiled, in case of necessity. Preferably sawn pre-profiled saw blank will then pass during the process into drying, pressing temperature treatment and/or profiling phase taking place simultaneously in the same machine. Pre-profiling of saw material or saw blank carried out will facilitate thermal treating and profiling, which will take place during hot pressing, necessary for the desired end product. After pressing the saw blank is already essentially in the form and state of a completed floor element of massive wood. Grooves or extension edges of longitudinal and/or end sides of the floor element can also be made to a blank of the floor element by means of a turning post-processing.

Each product, which is dried, thermal treated and hardened both compacted from the surface thereof by means of hot pressing will retain its dimensions and state even in the most differing conditions better than an end product manufactured by a traditional way, i.e. by drying saw material or saw blank and by a turning post-processing.

Pressure means of hot pressing will press only saw material or saw blank surface. In such case wood will soften and its binding substances will melt and the wood will be pressed together from surface layer, at the same time, when crimping of wood will decrease towards the midpoint of the blank.

While the floor element harden and thicken significantly only from surface at hot pressing and/or profiling:
inside the element will remain an increasing discharge space for extruding water and water vapor due to propagating press and heat, which will contribute essentially to successful completion of the process,
size, stiffness and flexural strength of the element will not decrease, as cross section profile of saw material or saw blank will not change essentially during hot pressing, hardness and compaction of element surface is maximum, because higher pressing force can be used due to the counter pressure that increases towards centre (counter pressure of colder wood and water vapor forced to extrude), that are needed for pressing force and temperature are minimal and massive wood floor element will gain the greatest possible surface hardness, surface compaction, humidity retention, stiffness preventing deformation and flexural strength.

In this way a new type of massive wood floor element with very high quality is provided by hot pressing and especially by using pressure parts not only on fiat surfaces, but also for at least pressing thermal treatment and/or forming of longitudinal sides and their grooves and tongues as well as deepened groove elements.

When pressing and heating is located precisely in the tools, which upon pressing will cause thermal treatment and/or forming of surfaces, tongues, grooves and deepened grooves, pressure and temperature can be directed directly onto the surface of pressed saw material or saw blank so that the desired chemical and physical changes for forming, compaction and hardening of the surface will take place only in surface layer.

Charging part is preferably formed of saw material or saw blanks, which charging part means blanks laid in parallel and sequence in several layers. Hence the pressing and thermal treating is performed simultaneously for a large amount of saw material or blanks. There are in every layer own pressure tools necessary to make or pressingly thermal treat a tongue means / a deepened groove.

Massive wood products resulting from the invention has achieved, among others, following advantages:
wood product is a profiled massive wood floor element, which is by hot pressing thermal treated and/or essentially finished,
external surface of the wood product is composed of compacted wood material, which is glued, with adhesive substances of its own,
external surface of the wood product is compacted really tight and hard wood material, wood product has straight fiat surface and side,
humidity deformation and other deformations are minimal,
need to use chemicals is minimal,
rot resistance and heat conduction are improved,
fire resistance is improved, as wood product of pressed massive wood has low inflammability,
wood product is a massive wood product in one piece.
Flexural strength is high, which enables to provide thin product thickness.

According to an embodiment of the invention it is also essential to massive wood floor element that it can be a double joint floor element and the floor element, which may include a deepened groove extending in both longitudinal sides or a deepened groove extending in only one longitudinal side or a canal groove extending in the flat downwards facing surface thereof, the groove/-s or canal forming a canal for installing a floor-heating element into a floor cover constructed from floor elements. In addition to that it is possible to produce above described or any other floor element, which is turnable, i.e. both flat surfaces thereof can be used as a floor surface. In addition to a double joint elements it is also characteristic, that two completely ready-made floor elements can be produced when such element is sawn into two pieces in horizontal direction, the flat surface to be a utility side and side surfaces of which are of compacted massive wood and which can also include tongues, grooves and deepened grooves.
Figure 1A describes the method of production of massive wood floor element from saw blank according to the invention.
Figure 1B describes production of massive wood floor elements performed in practice, where saw blanks are placed in hot press in parallel and one alter another in several layers.
Figure 2A describes massive wood floor element manufactured with the method according to the invention.
Figure 2B describes schematically tight and hard surface layer f of massive wood floor element, manufactured with the method according to the invention.
Figure 2C massive wood floor element manufactured with the method according to the invention, where joints are located in longitudinal sides of the element as well as in both ends.
Figure 2D describes massive wood floor element given in figure 2C from the direction of the arrow K₁.
Figure 3A describes massive wood floor element, which has been manufactured from the element described in figure 2A by deepening the joint groove in the latter.
Figure 3B describes massive wood floor element, which has been manufactured from the element described in figure 2C by deepening joint groove.
Figure 4A describes massive wood floor element manufactured by the method according to the invention, where actual joint is missing or which both longitudinal sides have deepened groove.
Figure 4B describes elements given in figure 4A, which have been placed together for jointing; deepened grooves of massive wood floor elements complement each other and form a relatively wide canal.
Figure 4C describes pressure tools necessary for the formation of long lateral surfaces of massive wood floor element given in figure 4A.
Figure 5A describes massive wood floor element manufactured with the method according to the invention, which both edges have elements for the formation of so-called double joint.
Figure 5B describes joint pressure tools for the production of floor element described in figure 5A.
Figure 6A describes massive wood floor element manufactured with the method according to the invention, which has deepened grooves in addition to double joint means.
Figure 6B describes two massive wood floor elements connected to each other, given in figure 6A, where deepened grooves of the elements complement each other and form a relatively wide canal.
Figure 6C describes pressure tools for the formation of joint and deepened grooves of massive wood floor element given in figure 6A.
Figure 7A describes floor element manufactured with the method according to the invention, in which bottom flat surface canal groove has been made Figure 7B describes floor element with main joint given in figure 7A.

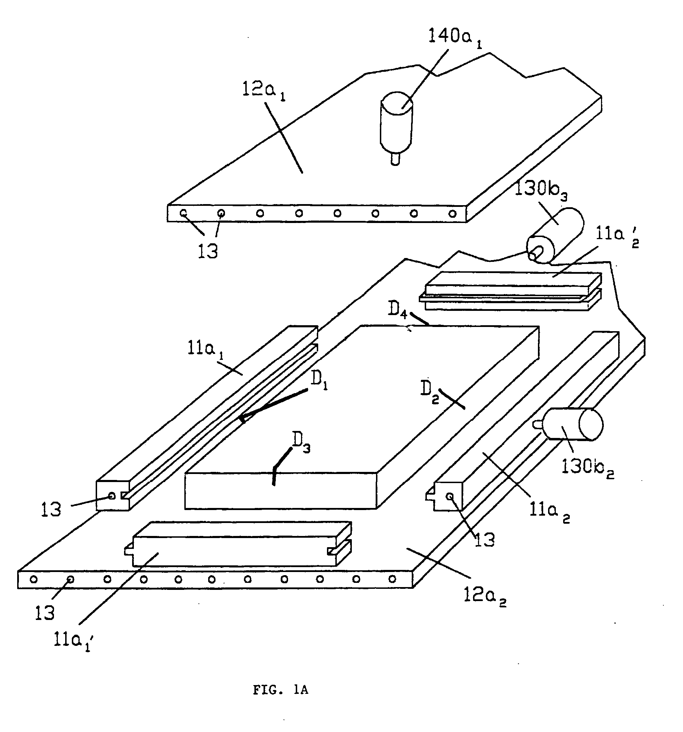

Figure 1A describes schematically the production of a floor element, hot pressed from each side, from a saw blank 200. In this application the floor element of massive wood means a floor plank, floor board or parquet, this has been made of the saw blank 200, and which surface layer has been compacted and hardened during hot pressing. Joints J₁ and grooves J₂ as well as other grooves U₁ and U₂ of longitudinal sides D₁ and D₂ as well as end sides D₃ arid D₄ of floor element complying with the invention, contacting with flat top and bottom surfaces, have been manufactured selectively;
by preliminary turning before a hot pressing, whereby final form of tongues and grooves has been achieved also with hot pressing or post-turning after hot pressing, by turning after hot pressing, whereby final form of tongues and grooves has been achieved by this post-turning, and/or
essentially by hot pressing, whereby floor element has been manufactured from the saw blank directly to an essentially ready-made floor element by hot pressing.

Each saw blank 200 has been made of saw-material. This involves both flat surfaces longitudinal sides D₁ and D₂ and end sides D₃ and D₄. Preferably said saw-blank is already pre-profiled during a sawing phase, if necessary according to comply with a product, whereby the same may include preliminary groove and tongue joint means, i.e. one or two preliminary extension edges and grooves both pre-deepened grooves. Such a possible pre-profiling of saw blank is riot presented in the figure.

At least one saw blank 200, which is composed of massive wood, is placed into a pressing equipment between an upper pressure plate 12a₁ and a lower pressure plate 12a₂ thereof, so that said saw blank 200 is placed to be surrounded at least from longitudinal sides D₁ and D₂ by tongue and groove joint formation tools, i.e. pressure tools 11a₁, and 11a₂.

Preferably one can use at both shorter ends D₃ and D₄ of the saw blank 200 the pressing thermal treatment tools and/or end side pressing tools 11 for the formation and/or pressingly thermal treat groove and tongue joint means, preferably it is used at one short side D₃ forming the extension element of the groove and tongue joint or for pressing thermal treating the same by the pressure tool 11a₁', and at the other short side D₄ it is used the pressure tool 11a₂', which forms the groove element of groove and tongue joint or pressingly thermal treats the same. In the figure it is described only profile that forms the saw blank. In practical situation there are several saw blanks located side by side and one after another, whereby at an opposite side of the tool there is a form that pressingly thermal treats and/or profiles the side of the adjacent saw blank.

The figure 1A describes schematically a heating device 13 located in the upper pressure plate 12a₁ and in the lower pressure plate 12a₂ as well as in the pressure tools 11a₁ and 11Ia₂ for the longitudinal side. <there is used electrical heating device, which generates sufficiently high temperature, or oil canals, through which hot oil is led, in order to achieve the effect necessary for thermal treating of the surfaces of saw blank. Means generating pressing effect are marked with reference number 140 and 130. Preferably there is used pressing cylinder 140a₁, which generates pressure in the upper pressure plate 12a₁ and in the lower pressure plate 12a₂, as well as pressing cylinders 130b₂ and 130b₃, which generate pressure in pressure tools 11a₁, 11a2, 11a₁' and 11a2'.

In a first stage flat surfaces of saw blanks are pressed straight and to the thickness specified by pressure tools. Most of the water discharges during this stage. Then in the width direction of the blanks the sides of the blanks are pressed straight and at the same their widths are pressed to correspond to the length of the pressure parts 11a₁' and 11a₂' of the groove and tongue joints while the pressure parts of the longitudinal sides pressingly thermal treat the sides of the blank and/or form and/or in addition to the side surfaces pressingly thermal treat also groove and tongue joint means at both longitudinal sides of the blank, i.e. extension edge/edges J₁ or joint tongue and joint groove/grooves J₂, and/or grooves U, and U₂ having the form of deepened groove U.

Finally, if necessary, a longitudinal pressing of the saw blanks is performed with pressure parts 11a₁' and 11a₂' of the blank ends, which upon pressing will treat thermally the ends of the saw blanks and selectively form end groove and the tongue joint elements in them, i.e. the extension edge/edges J₁ or the joint tongue and joint groove/grooves J₂.

In order to discharge vapors, to improve pressing thermal treatment and to improve profiling series of the press is repeated several times according to the necessity.

As a last stage is performed a cooling of the saw blanks while pressing continues below 40°C. Hereby in a pressing temperature, which is between 150 - 220 °C, melted adhesion materials will stiffen. Pressed, essentially completed floor element of massive wood will remain in the desired form after press is opened.

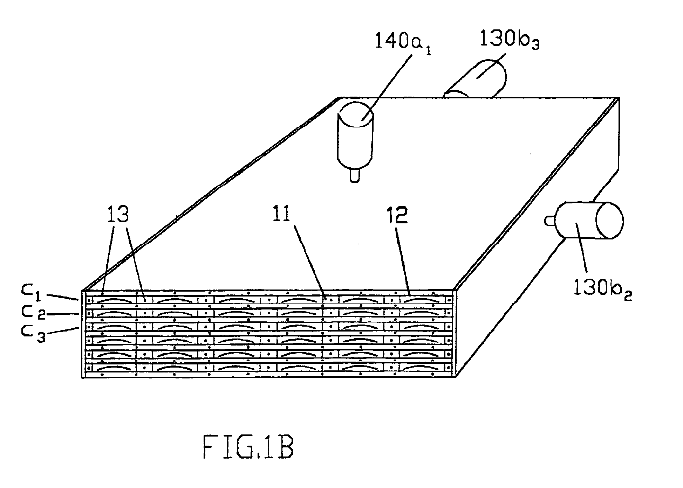

Figure 1B describes several saw blanks placed on each other. Layers are marked in the figure as c₁, c₂, c₃ .... Each layer c₁, c₂... contains several saw blanks in parallel and one after the other in pressed condition and between them there are pressure tools 11 meant for hot pressing and/or for forming of joint/deepened groove. It is not inevitably necessary to form the final shape of the longitudinal side of the floor element by the pressure tool, such final shape of the pressed floor element has not been presented in the figure neither there is presented a corresponding profile form of the pressure tools 11. Height H of the pressure tools 11 is preferably just the height, to which thickness the board floor blank is desired to be pressed in order to form the hot pressed floor element 100 of massive wood. So pressing force is generated vertically and in right angle in relation to it, i.e. horizontally. IN horizontal direction, pressing force is brought against longitudinal sides by pressure tools 11a₁, 11a₂, which will provide to the longitudinal sides D₁ and D₂ of the floor element of massive wood: the pressing thermal treatment, the side straightness, the desired width, which corresponds to the pressure part 11 of the end, to the joint groove, to the joint tongue, to the deepened groove. One preferable embodiment is naturally also such, wherein the pressure tools 11a₁' and 11a₂' are used in the horizontal pressing direction in order to pressingly thermal treat and/or by hot pressing form both shorter end sides of the saw blank.

Following processing is used. Temperature T is within the range of 150-220°C. Pressing pressure P is within the range of 10-15 kp/cm². Total pressing tune H is within the range of 2-5 h.

Hence is achieved all essential and desired special features of floor element, such as side straightness of longitudinal sides and sufficient thermal treatment of groove and tongue joint means and deepened groove. Hence post-turning provides the final exact profile of floor element preferably after hot pressing.

In order to make hot pressing process, thermal treatment by pressing of product profile and its surfaces successful in a desired way there is a reason to comply details of product profile, pre-turning profile and pressure tool profile with the product.

The application does not describe possible pre-turning tools or profiles neither detailed nor precise pressure tool and product profiles.

In the Figure 2A is presented the floor element 100, which is provided by a method described in the figures 1A and 1B. In the floor element 100 of massive wood presented in the figure 2A the joint element I,, J₂ has been formed on the both longitudinal sides D₁ and D₂ of the floor element of massive wood. In the embodiment presented in the Figure 2A the both end sides D₂ and D₄ are presented without the groove and tongue joint means J₁ and J₂.

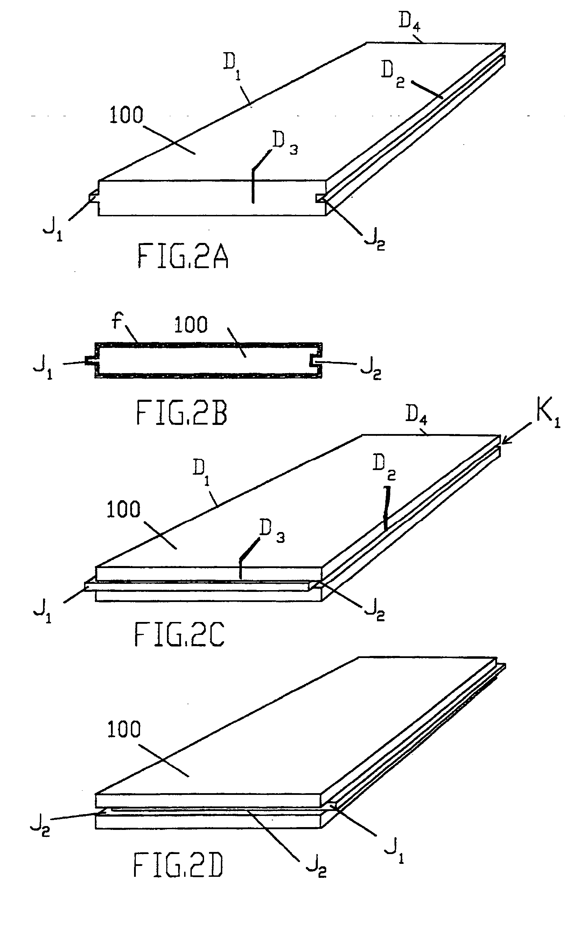

In the Figure 2B, there is presented schematically a compacted and hardened surface layer f in the floor element of massive wood with the groove and tongue joint means, produced by the method according to the invention. Using heat production and surface heating in the hot pressing phase, the above mentioned compacted and hardened layer is produced on the surface of massive wood floor element and at the same time ii is possible to pressingly thermal treat and/or profile the groove and tongue joint means J₁ and J₂ and/or grooves U₁ and U₂ with the shape of the deepened groove U in longitudinal sides D₁ and D₂ of the massive wood floor element, using pressure tools 11. If pressing thermal treatment is directed into the pre-turned joint groove or another groove it accomplished the advantage that the border surface of that groove will harden and compact. Independent of the fact, that whether pro-turning is used or not, pressure tools will perform the formation and/or pressing thermal treating of groove and tongue joint means in desired form and dimensions of essentially completed floor element. Also such an embodiment is possible, wherein groove and tongue joint means or their pre-blanks are formed during hot pressing stage into the saw blank, which does not include pre-sawn grooves and extension edges for the groove and tongue joint. If during hot pressing the pre-blanks of the groove and tongue joint means are performed, the groove and tongue joint means are formed and deepened to final dimensions after hot pressing by post-turning.

In the Figure 2C, there is presented the floor element 100, which corresponds to the element of the figure 2A, in which the completed floor element of massive wood is manufactured by hot pressing horizontally and vertically, whereby it includes the groove and tongue joint means J₁, J₂ on all sides D₁, D₂, D₃ and D₄ thereof.

In the Figure 2D, there is presented the floor element of massive wood of the figure 2C in the direction of the arrow K₁ of the figure 2C.

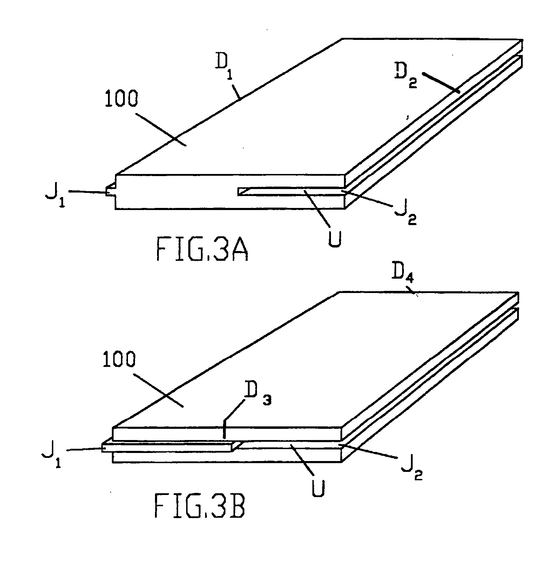

Figure 3 A, there is described the floor element 100, which has been formed from the element of the figure 2A by deepening the groove and tongue joint groove J₂ on the side surface thereof to function as a U shaped deepened groove U₁ and U₂, which forms a canal necessary for installation of the floor-heating element. Hereby it is preferable that a cross section or external circumference profile of the floor-heating element will correspond essentially to the shape of the cross section profile of the deepened groove U receiving the same whereby the heat transmission surface between heat element and opposite surface of deepened groove will be as large as possible. Heating element can be installed in such a canal and the heating element as such can be a flow pipe for heating medium, e.g. liquid, air or gas, or an electric resistance. In such a way floor-heating can be installed and integrated in the floor elements and floor cover constructed thereof and installation into a base construction can be avoided.

The floor element 100 described in the figure 3B has been formed correspondingly from the element of figure 2C. Further, it includes an above mentioned end groove and tongue joint means.

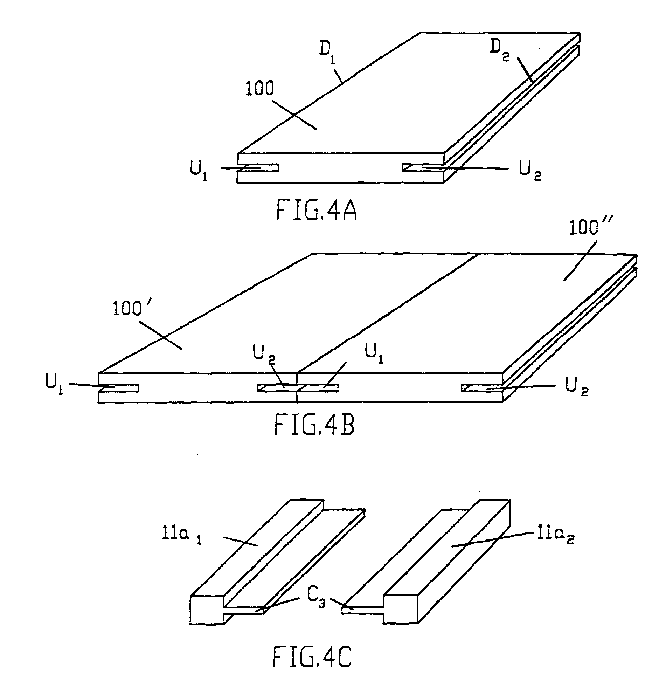

In the figure 4A, there is described the floor element 100, which is lacking a true groove and tongue joint means. Sides of the element are provided with a groove U₁, U₂ having a shape of a deepened groove U.

In the figure 4B, there are described elements 100' and 100" according to the figure 4A as-oriented side by side. Jointing the elements together will take place by placing a joint element or more preferably the heating element, which is manufactured for the purpose, into a canal formed of the deepened grooves U₂ and U₁ of floor. Heating element may include a flow pipe for heating medium, e.g. liquid, air or gas, or an electric resistance. In such a way floor-heating is placed inside the floor elements and floor cover constructed thereof and does not remain in the floor base construction according to the prior art, which is a more unpreferred solution especially when wooden floor covers are used.

In the figure 4C, there are described pressure tools 11a₁ and 11a₂, by which the deepened grooves on the sides D₁, D₂ of the element of the figure 4A are formed and/or pressingly thermal treated.

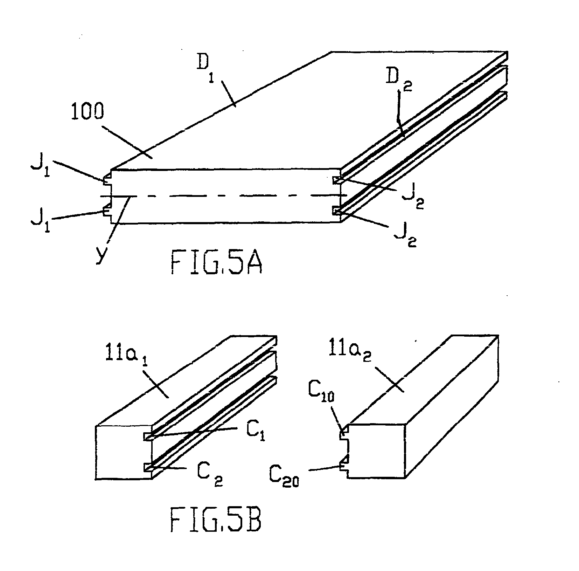

In the figure 5A, there is described floor element 100 accomplished of massive wood preferably of full wood by a hot pressing, which element include groove and tongue joint means J₁, J₂ on both longitudinal sides D₁, D₂ of the floor element so that there are two groove and tongue joint means on either longitudinal side. In the figure, there are two extension edges J₁ or male joints on the longitudinal side D₁ and two grooves J₂ or female joints on the opposite side D₂. Such a double joint construction provides a very stable jointing. Further, the advantage is that due to smaller size of the groove and tongue joint means lower pressing force is needed for forming the same just by hot pressing. Further, the floor element of massive wood with the double joint can be sawn along the midline y shown in the figure 5A so that it will provide two essentially completed floor elements, each of which having a flat usable side surface and lateral surfaces of massive wood and which is compacted and hardened by hot pressing. Also such an embodiment is possible, wherein double groove and tongue joint elements J₁, J₂ are formed so that one side D₁ having a female joint and a male joint, is located respectively and preferably opposite to other male and female joints on the other longitudinal side D₂.

In the figure 5B, there are described pressure tools 11a₁, 11a₂ for the longitudinal side for providing double groove and tongue joint means and/or for pressing thermal treating of longitudinal sides D₁, D₂ of the element according to the figure 5A. As shown in the figure 5B, the profile of one pressure tool 11a₁ comprises grooves C₁, C₂ for formation and/or for pressingly thermal treat the male joints J₁, according to the figure 5A, on one longitudinal side D₁ of the floor element 100 and the profile of the other pressure tool 12a₂ comprise extension edges C₁₀, C₂₀ for the formation and/or pressingly thermal treat of the female joints, according to the figure 5A, of on the other longitudinal side D₂ of the floor element 100. Corresponding pressure tools can also be placed at the ends of the saw blank for the formation and pressing thermal treat or hot pressing of groove and tongue joint elements.

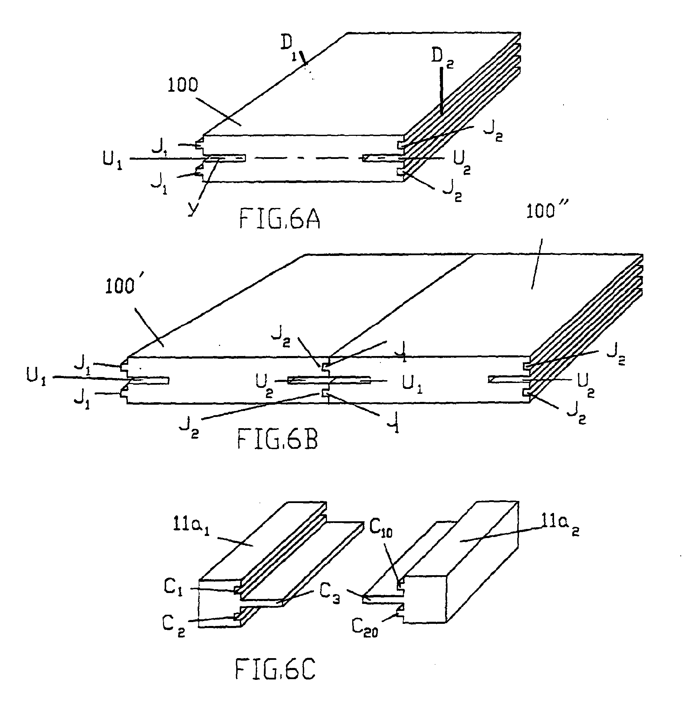

Further to the so-called double joint shown in figure 5A, the massive wood floor element 100, according to the figure 6A, include grooves U₁, U₂ having the shape of the deepened groove U and running in the direction of the longitudinal sides D₁ and D₂ of the floor element 100 of massive wood. The massive wood floor element includes the double groove and tongue joint means and deepened grooves, can be sawn along the horizontal midline y presented in the figure 6A, so that two essentially completed floor elements of wood material are provided there from, both of them have a flat usable surface side and the lateral surfaces, which wood material is compacted and hardened by hot pressing. Within the scope of the invention, there is possible also such an embodiment, that the double groove and tongue joint means J₁, J₂ is provided, so that on one side D₁ there are located the groove and the and extension edge and on the other longitudinal side D₂ there are located the extension edge and the groove, respectively.

In the figure 6B, there are disclosed two massive wood floor elements 100', 100", according to the figure 6A, as connected to each other, whereby the deepened grooves U₂ and U₁ of the massive wood floor elements 100', 100", which are located side by side are connected with each other and form a rather wide canal. Flow pipe of heating medium, e.g. air, gas or liquid or electric resistance heating device can be installed into the canal. In such a way the floor-heating is placed inside the floor elements and the floor cover constructed thereof and the floor-heating does not remain in the floor base construction, which is in accordance with the prior art, which is a more unpreferred solution especially when wooden floor covers are used.

In the figure 6C, there are disclosed pressure tools 11a₁, 11a₂ for massive wood floor element including the canal element according to the figure 6A. The massive wood floor element has been made like the floor elements described in the previous figures of the saw blank, but the pressure tools 11 are formed here so that they include means, which form double groove and tongue joint and deepened grooves and/or pressingly thermal treat the same. One pressure tool 11a₁ include an edge C₃, which provide the extension edges C₁, C₂ both the groove U₁, U₂ having the shape of the deepened groove U. Correspondingly the pressure tool 11a₂ to be located along the second longitudinal side of the floor element, includes means forming the edge C₃, which provide and/or pressingly treats thermally the grooves C₁₀, C₂₀ of the groove and the tongue joint both the groove U₁, U₂ having the shape of the deepened groove U. The pressure tools 11a₁, 11a₂ are treated by pressing force achieved by means of a power device, such as power cylinder. Further, the heating is provided, according to the invention, via the pressure tools by heating devices 13 installed therein so, that by simultaneously pressing the surface and/or the groove and/or the extension edge of the saw blank by means of the heating pressure tool there is provided the pressing thermal treating to said longitudinal sides D₁ and D₂ of the saw blank. It is possible to install at the ends of the saw blank pressure tools, which provide and pressingly thermal treat groove and tongue joint means corresponding to side groove and tongue joint means.

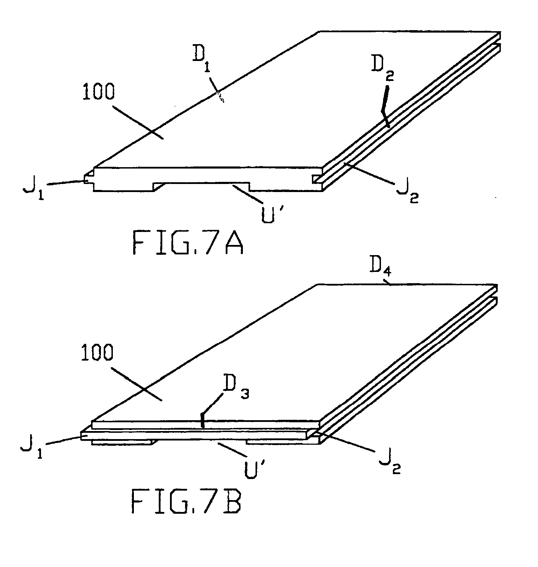

In the figure 7A, there is described a massive wood floor element produced by splitting the floor element according to figure 2A or figures 5A and 6A, which element has in the bottom flat surface a groove U' formed during a post-processing, which together with a base floor forms a canal necessary for installing a floor-heating element. A flow pipe for heating medium, e.g. liquid, air or gas, or an electric resistance, can be placed into the canal. In such a way the floor-heating is placed inside the floor elements and the floor cover constructed thereof and the floor-heating does not remain in the floor base construction, which is in accordance with the prior art, which is a more unpreferred solution especially when wooden floor covers are used.

In the figure 7B, there is described the floor element according to the figure 7A but when the same is provided with groove and tongue joint means of the end.

A floor-heating element can be installed directly into a floor cover and not into the base construction of the floor cover that is also used as a solution for floor cover. Hence a floor cover, such as floor board, parquet or another floor cover, is constructed of floor elements, which are provided with a groove or grooves and which are mutually connected by installing a floor-heating element into the canal, which is between adjacent longitudinal sides of floor elements

Heat transmission from the heating element locating inside the surface cover material cover to the surface cover and further wherefrom to room air is more efficient and economical, because:

The surface cover does not function as insulation in the extent corresponding to the prior art solutions.

Base construction of the floor does not function as a heat accumulator and transmitter but functions as a heat insulator. Heat insulating and reflecting material is located under the surface cover and not under the base floor. No qualities of beat conduction and storage are required from the base construction. The need for heat insulation of the whole floor construction is small. Less heat is needed.
Heat is transferred more quickly into the room space. Reaction speed to the changes of heat need taking place in the space will increase. Hereby a lower water temperature can be used. Also a lower floor surface temperature is achieved. In addition to that, better efficiency is available for use of soil, air or sun heat.

The application includes also solutions, that double groove and tongue joint described in figure 5A or 6A or a corresponding, differing from the prior art floor cover technology, preferably a double groove and tongue joint, or another preferable groove and tongue joint provided by using the floor-heating element (figure 4B) is used-also for a floor surface cover such as floor board, parquet or other floor cover.

## Claims

1. Method of producing a solid wood product (100,100', 100"), preferably a floor element, such as a floor plank, floor board, member parquet,
said wood product having an upper flat surface and a lower flat surface, as well as longitudinal sides (D₁, D₂) and end sides (D₃, D₄),
whereby said product is first profiled by profiling means, in order to form at least groove or cavity onto at least one of said longitudinal sides,
then said at least upper flat surface together with said at least one profiled longitudinal side of said wood product is hot pressed by the application of pressure tools, in order to form an essentially compact upper surface and profiled side layer, which is both surface hardened and denser in comparison with the internal portion of said wood product.

2. Method according to claim 1, **characterized by** an edge (J₁) or groove (J₂, U', U₁, U₂) being selectively made to at least one of said longitudinal sides (D₁,D₂) of said wood product blank (200): before, after or during said hot pressing.

3. Method according to claim 1, **characterized by** an extension edge (J) or groove (J₂) being selectively made to at least one of said end sides (D₃, D₄) of said wood product blank (200) selectively: before, after or during hot pressing.

4. Method according to any of claims 1-3, **characterized by** both said upper and lower flat surfaces and both longitudinal sides (D₁, D₂) of said wood product blank (200) being thermally treated by pressing by said pressure tools (11a₁, 11a₂).

5. Method according to claim 1-4, **characterized in, that** the extension edge (J₁, J₂) and/or groove (U₁, U₂) and/or deepened groove (U) is profiled and/or hot pressed by said pressure tools (11a₁ 11a₂).

6. Method according to any of claims 1-5, **characterized in, that** at least one of said flat surface layers of said wood product blank (200) is surface hardened between the external surface of the extension edge (J₁, J₂) and/or the groove (U₁, U₂) and/or the deepened groove (U).

7. Method according to any of claims 4-6, **characterized in, that** a groove (J₂) and/or an extension edge (J₁) is formed by hot pressing by means of the pressure tools (11a₁, 11a₂') to both ends (D₃, D₄) of the wood product blank (200).

8. Method according to any of claims 1-7, **characterized in, that** a groove (U₁, U₂) having the shape of a deepened groove (U) is formed in both longitudinal sides (D₁, D₂) of said wood product blank (200) by hot pressing.

9. Method according to any of claims 1- 8, **characterized by** forming on one longitudinal side (D₁) of said wood product blank, one or two extension edges (J₁) and on a second longitudinal side (D₂) of said wood product blank, one or two grooves (J₂).

10. Method according to any of claims 1-9, **characterized by** forming a first groove (U₁) having the shape of a deepened groove (U), and two extension edges (J₁) on one longitudinal side (D₁) of said wood product blank; and a second groove (U₂) having the shape of a deepened groove (U), and two grooves (J₂) on the second longitudinal side of said wood product blank.

11. Method according to any of claims 1-10, **characterized by** hot pressing of said flat surfaces together with said longitudinal sides of said wood products in temperature between 150-200 °C; and said wood products are then cooled under pressure to below 40 °C, whereby melted bonding substances of the wood will stiffen and the hot pressed wood product forms the completed wood product, preferable said floor element.

12. Method according to any of claims 1-11, **characterized in, that** the hot pressing step is repeated several times.

13. Method according to any of claims 1-12, **characterized by** applying first cylinders (140aᵢ) in a vertical direction for providing a vertical pressure force, and that for providing a horizontal pressure force horizontal plane second cylinders (130b₂, 130b₃) are used to influence said pressure tools (11a₁, 11a₂, 11a₁', 11a₂'), which thermally treat and straighten all lateral surfaces (D₁, D₂, D₃, D₄) of said blanks (200).

14. Method according to any of claims 1-13, **characterized in, that** during the hot pressing step, the pressing force P is between 10-15 kp/cm², the total pressing time H is between 2-5 hours and temperature T is between150-220 °C.

## Patentansprüche

1. Methode des Produzierens eines festen hölzernen Produktes (100.100', 100"), vorzugsweise ein Fußbodenelement, wie eine Fußbodenplanke, Fußbodenbrett, Mitgliedsparkett,
besagtes hölzernes Produkt eine obere flache Oberfläche und eine unterere flache Oberfläche, sowie Längsseiten (D₁, D₂) und Ende Seiten (D₃, D₄) hat,
hingegen besagtes Produkt zuerst profiliert wird, indem man Mittel profiliert, zwecks mindestens Nut oder Raum auf eine von mindestens besagten Längsseiten bilden,
dann besagte mindestens obere flache Oberfläche zusammen mit gesagt mindestens einer profilierten Längsseite besagtem hölzernem Produkt ist betätigt durch die Anwendung der Druckwerkzeuge, um eine im Wesentlichen kompakte Oberfläche und eine profilierte seitliche Schicht zu bilden heißes, die die Oberfläche ist, die verhärtet wird und im Vergleich mit dem internen Teil des besagten hölzernen Produktes dichter.

2. Methode entsprechend dem Patentanspruch 1, **gekennzeichnet durch** einen Rand (J₁) oder die Nut (J₂, U', U₁, U₂), die selektiv bis eine mindestens von besagten Längsseiten (D₁, D₂) gebildet wird des besagten hölzernen Produktfreien raumes (200) selektiv: vor, nach oder während dem besagten heißen Betätigen.

3. Methode entsprechend dem Anspruch 1, **gekennzeichnet durch** einen Verlängerung Rand (J) oder die Nut (J₂), die selektiv bis eine mindestens von besagten Ende Seiten (D₃, D₄) gebildet wird des besagten hölzernen Produktfreien raumes (200): vor, nach oder während dem heißen Betätigen.

4. Methode entsprechend irgendwelchen von Ansprüchen 1-3, **gekennzeichnet durch** besagte obere und unterere flache Oberflächen und beide Längsseiten (D₁, D₂) des besagten hölzernen Produktfreien raumes (200), der thermisch mit dem Betätigen **durch** besagte Druckwerkzeuge (11a₁, 11a₂) behandelt wird.

5. Methode entsprechend dem Anspruch 1-4, **dadurch gekennzeichnet, dass** der Verlängerung Rand (J₁, J₂) und/oder die Nut (U₁, U₂) und/oder die vertiefte Nut (U) profiliert wird und/oder heißes durch besagte Druckwerkzeuge (11a₁, 11a₂) betätigt.

6. Methode entsprechend irgendwelchen von Ansprüchen 1-5, **dadurch gekennzeichnet, daß** eine mindestens von besagten flachen Deckschichten des besagten hölzernen Produktfreien raumes (200) Oberfläche ist, verhärtete sich zwischen der externen Oberfläche des Verlängerung Randes (J₁, J₂) und/oder die Nut (U₁, U₂) und/oder die vertiefte Nut (U).

7. Methode entsprechend irgendwelchen von Ansprüchen 4-6, **dadurch gekennzeichnet, daß** eine Nut (J₂) und/oder ein Verlängerung Rand (J₁) durch das heiße Betätigen mittels der Druckwerkzeuge gebildet wird (11a₁', 11a₂') zu beiden Enden (D₃, D₄) des hölzernen Produktfreien raumes (200).

8. Methode entsprechend irgendwelchen von Ansprüchen 1-7, **dadurch gekennzeichnet, daß** eine Nut (U₁, U₂) die Form einer vertieften Nut (U) habend in beiden Längsseiten (D₁, D₂) des besagten hölzernen Produktfreien raumes (200) durch das heiße Betätigen gebildet wird.

9. Methode entsprechend irgendwelchen von Ansprüchen 1 - 8, **gekennzeichnet durch** die Formung auf einer Längsseite (D₁) besagtem hölzernem Produktfreiem raum, ein oder zwei Verlängerung Ränder (J₁) und auf einer zweiten Längsseite (D₂) des besagten hölzernen Produktfreien raumes, ein oder zwei Nuten (J₂).

10. Methode entsprechend irgendwelchen von Ansprüchen 1-9, **gekennzeichnet durch** die Formung einer ersten Nut (U₁) die Form einer vertieften Nut (U) habend und zwei Verlängerung Ränder (J₁) auf einer Längsseite (D₁) besagtem hölzernem Produktfreiem raum; und eine zweite Nut (U₂) die Form einer vertieften Nut (U) habend und zwei Nuten (J₂) auf der zweiten Längsseite des besagten hölzernen Produktfreien raumes.

11. Methode entsprechend irgendwelchen von Ansprüchen 1-10, **gekennzeichnet durch** das heiße Betätigen der besagten flachen Oberflächen zusammen mit besagten Längsseiten der besagten hölzernen Produkte in der Temperatur zwischen °C 150-200; und besagte hölzerne Produkte werden dann unter Druck zu °C unter 40, hingegen geschmolzene abbindene Substanzen des Holzes sich versteifen und das heiße gepreßte hölzerne Produkt das abgeschlossene hölzerne Produkt bildet, vorzuziehendes besagtes Fußbodenelement abgekühlt.

12. Methode entsprechend irgendwelchen von Ansprüchen 1-11, **dadurch gekennzeichnet, daß** der heiße betätigende Schritt mehrmals wiederholt wird.

13. Methode entsprechend irgendwelchen von Ansprüchen 1-12, **gekennzeichnet,** indem man erste Zylinder (140aᵢ) in einer vertikalen Richtung für das Zur Verfügung stellen einer vertikalen Druckkraft anwendet, und die für das Zur Verfügung stellen zweiten Zylinder einer der horizontalen der Druckkraft Horizontalebene (130b₂, 130b₃) werden verwendet, um besagte Druckwerkzeuge (11a₁, 11a₂, 11a₁', 11a₂') zu beeinflussen, die thermisch alle seitlichen Oberflächen behandeln und geraderichten (D₁, D₂, D₃, D₄) von besagten freien Räumen (200).

14. Methode entsprechend irgendwelchen von Ansprüchen 1-13, **dadurch gekennzeichnet**, das während des heißen betätigenden Schrittes, die betätigende Kraft P zwischen 10-15 kp/cm² ist, die betätigende Gesamtzeit H ist zwischen 2-5 Stunden und Temperatur T ist zwischen °C 150-200.

## Revendications

1. Méthode de produire un produit en bois plein (100.100', 100 "), de préférence un élément de plancher, tel qu'une planche de plancher, panneau de plancher, parquet de membre,
ledit produit en bois ayant une surface plate supérieure et une surface plate inférieure, comme les côtés longitudinaux (D₁, D₂) et les côtés d'extrémité (D₃, D₄),
par lequel ledit produit soit d'abord profilé en profilant des moyens, afin de former au moins la cannelure ou la cavité sur au moins un de lesdits côtés longitudinaux,
au moins la surface plate supérieure alors ainsi que dit au moins un côté longitudinal profilé de ledit produit en bois est chaude serré par l'application des outils de pression, afin de former un extrados essentiellement compact et une couche latérale profilée, qui est surface durcie et plus dense en comparaison de la partie interne de ledit produit en bois.

2. Méthode selon la revendication 1, **caractérisée par** un bord (J₁) ou la cannelure (J₂, U', U₁, U₂) étant sélectivement faite au moins à un de lesdits côtés longitudinaux (D₁, D₂) de ledit blanc en bois de produit (200) sélectivement: avant, après ou pendant ladite pression chaude.

3. Méthode selon la revendication 1, **caractérisée par** un bord de prolongation (J) ou la cannelure (J₂) étant sélectivement faite au moins à un de lesdits côtés d'extrémité (D₃, D₄) de ledit blanc en bois de produit (200): avant, après ou pendant la pression chaude.

4. Méthode selon quelles de revendications 1-3, **caractériséé** par lesdites surfaces plates supérieures et inférieures et les deux côtés longitudinaux (D₁, D₂) de ledit blanc en bois de produit (200) thermiquement traité par la pression par lesdits outils de pression (11a₁, 11a₂).

5. Méthode selon quelles de revendications 1-4, **caractérisée** dedans, que le bord de prolongation (J₁, J₂) et/ou la cannelure (U₁, U₂) et/ou la cannelure approfondie (U) est profilé et/ou chaud est serré par lesdits outils de pression (11a₁, 11a₂).

6. Méthode selon quelles de revendications 1-5, **caractérisée** dedans, qu'au moins une de lesdites couches extérieures plates de ledit blanc en bois de produit (200) est surface a durci entre la surface externe du bord de prolongation (J₁, J₂) et/ou la cannelure (U₁, U₂) et/ou la cannelure approfondie (U).

7. Méthode selon quelles de revendications 4-6, **caractérisée** dedans, qu'une cannelure (J2) et/ou un bord de prolongation (J₁) est constitué par la pression chaude à l'aide des outils de pression (11a1', 11a2') aux deux extrémités (D₃, D₄) du blanc en bois de produit (200).

8. Méthode selon quelles de revendications 1-7, **caractérisée** dedans, qu'une cannelure (U₁, U₂) ayant la forme d'une cannelure approfondie (U) est formé des deux côtés longitudinaux (D₁, D₂) de ledit blanc en bois de produit (200) par la pression chaude.

9. Méthode selon quelles de revendications 1 - 8, **caractérisée par** la formation d'un côté longitudinal (D₁) de ledit blanc en bois de produit, un ou deux bords de prolongation (J₁) et d'un deuxième côté longitudinal (D₂) de ledit blanc en bois de produit, un ou deux cannelures (J₂).

10. Méthode selon quelles de revendications 1-9, **caractérisée en** formant une première cannelure (U₁) ayant la forme d'une cannelure approfondie (U), et deux bords de prolongation (J₁) d'un côté longitudinal (D₁) de ledit blanc en bois de produit ; et une deuxième cannelure (U₂) ayant la forme d'une cannelure approfondie (U), et deux cannelures (J2) du deuxième côté longitudinal de ledit blanc en bois de produit.

11. Méthode selon quelles de revendications 1-10, **caractérisé par** la pression chaude de lesdites surfaces plates ainsi que lesdits côtés longitudinaux de lesdits produits en bois dans la température entre le °C 150-200; et lesdits produits en bois sont alors refroidis sous pression au °C en-dessous 40, par lequel les substances collantes fondues du bois raidissent et le produit en bois serré chaud forme le produit en bois réalisé, ledit élément préférable de plancher.

12. Méthode selon quelles de revendications 1-11, **caractériséé** dedans, que l'étape de pression chaude est répétée plusieurs fois.

13. Méthode selon quelles de revendications 1-12, **caractérisée en** appliquant les premiers cylindres (140aᵢ) dans une direction verticale pour fournir une force verticale de pression, et celle pour fournir cylindres horizontaux d'un plan horizontal de force de pression les deuxièmes (130b₂, 130b₃) sont employées pour influencer lesdits outils de pression (11a₁, 11a₂, 11a₁', 11a₂'), qui thermiquement traitent et redressent toutes les surfaces latérales (D₁, D₂, D₃, D₄) de lesdits blancs (200).

14. Méthode selon quelles de revendications 1-13, **caractériséé** dedans, qui pendant l'étape de pression chaude, la force de pression P est entre 10-15 kp/cm², tout le temps de pression H a lieu entre 2-5 heures et la température T est entre le °C 150-220.
